# EUROPEAN PATENT APPLICATION

(11) **EP 4 726 225 A1**
(43) Date of publication of application: **15.04.2026**
(21) Application number: 24819284.1
(22) Date of filing: 03.06.2024
(51) Int. Cl.: F16B 37/12

(54) **FASTENING AUXILIARY PART AND FASTENING SYSTEM**

(30) Priority: 09.06.2023 JP 2023095746
(71) Applicant: Advanex Inc., Tokyo 114-8581 (JP)
(72) Inventor: OKAMURA, Sakae, Nakatsu-shi, Oita 879-0103 (JP)
(74) Representative: DREISS Patentanwälte PartG mbB
(86) International application number: PCT/JP2024/020161
(87) International publication number: WO 2024/253054

(57) **Abstract**

Problem to be Solved: To provide a fastening aid that can be fastened without using a dedicated tool. Solution to the Problem: A fastening aid, formed of a wire processed into a helical shape, for reinforcing a female thread portion of a tapped hole formed in a fastening target of a bolt, wherein an insertion side into the tapped hole has a tapered portion, and an inner diameter of the tapered portion is equal to or smaller than a root diameter of a male thread portion of the bolt.

## Description

### FIELD OF THE INVENTION

The present invention relates to a fastening aid and a fastening assembly, and more particularly to a fastening aid and a fastening assembly in which a fastening target of a bolt is made of a soft material such as resin.

### BACKGROUND OF THE INVENTION

Patent Document 1 discloses a fastening aid called a helical coil insert, which has a protrusion, also referred to as a tang, that serves as a portion to which a dedicated tool is hooked when the helical coil insert is mounted to a fastening target. The helical coil insert described in Patent Document 1 requires troublesome operations in which the protrusion must be cut off after the helical coil insert itself is mounted to the fastening target and further requires bothersome operations in which the cut-off protrusion must be collected through the inside of the helical coil insert.

Non-Patent Document 1 discloses a fastening aid called a tangless insert in order to solve the problems of Patent Document 1. As indicated by the name "tangless," the tangless insert has a structure without the above-described protrusion, so that the troublesome operations described above are unnecessary.

Non-Patent Document 1 also includes a video together with a description indicating that, while a fastening time of 56 seconds was required for a helical coil insert corresponding to that disclosed in Patent Document 1, the fastening time can be significantly shortened to only 7 seconds in the case of a tangless insert.
Patent Document 1: Japanese Application Patent Re-publication No. 2020-008639
Non-Patent Document 1: disclosure in URL: https://www.kssc.co.jp/tangless/

### SUMMARY OF THE INVENTION

### PROBLEMS TO BE SOLVED BY THE INVENTION

However, an operation of fastening a tangless insert to a fastening target as disclosed in Non-Patent Document 1 is merely an intermediate step in the final process of fastening a bolt. For example, if the bolt fastening operation requires 8 seconds, the same as the fastening time of the tangless insert, the total time until completion of the final process becomes 16 seconds; however, there is therefore a demand for further reduction in the fastening time of both the tangless insert and the bolt.

In addition, both the helical coil insert of Patent Document 1 and the tangless insert of Non-Patent Document 1 require a fastening operation using a dedicated tool. In general, a dedicated tool is inevitably expensive, and thus becomes a factor preventing cost reduction of a final product. Therefore, in order to achieve cost reduction of the final product, it is necessary to enable the fastening operation to be performed without using a dedicated tool, that is, by using a general-purpose tool.

Accordingly, it is an object of the present invention to achieve further reduction in the fastening time of a helical coil insert (tangless insert) and a bolt.

Another object of the present invention is to provide a fastening aid that can be fastened without using a dedicated tool.

### MEANS TO SOLVE THE PROBLEM

In order to solve the above problems, the present invention provides a fastening aid, formed of a wire processed into a helical shape, for reinforcing a female thread portion of a tapped hole formed in a fastening target of a bolt, where the fastening aid has a tapered portion at an insertion side to be inserted into the tapped hole, and an inner diameter of the tapered portion is equal to or smaller than a root diameter of a male thread portion of the bolt.

For example, the inner diameter of the tapered portion may be 90% to 95% of a root diameter of the male thread portion of the bolt.

Further, although the tapered portion of the wire may have one or more turns, when it has two or more turns, if a diameter of the tapered portion increases linearly from a tip side toward a base side, there is an advantage that fastening to the fastening target can be facilitated.

In addition, a fastening assembly of the present invention has the above fastening aid and a bolt to be used together with the fastening aid.

The bolt may be mounted in the fastening aid. When the fastening assembly is shipped in such a state, there is an advantage that an operator does not need to perform an operation of mounting the fastening aid and the bolt together.

### MODE FOR CARRYING OUT THE INVENTION

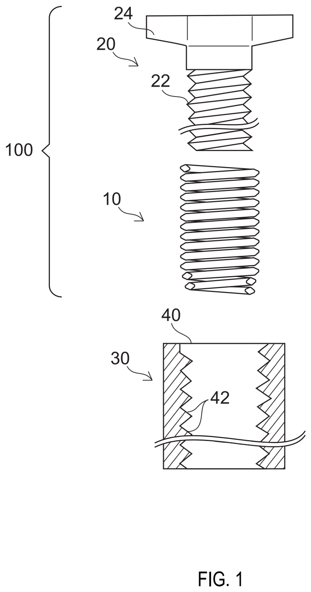

Hereinafter, embodiments of the present invention will be described with reference to the drawings. FIG. 1 is an explanatory view of a fastening assembly 100 according to an embodiment of the present invention. As shown in FIG. 1, the fastening assembly 100 includes a fastening aid 10, details of which will be described later, and a bolt 20 used together with the fastening aid 10. In addition, FIG. 1 also shows a fastening target 30 in which a tapped hole 40 is formed.

The bolt 20 may be of a known type and has a male thread portion 22. On the other hand, the tapped hole 40 formed in the fastening target 30 has a female thread portion 42. The bolt 20 is screwed into the female thread portion 42 through the fastening aid 10, with the male thread portion 22 being engaged therewith.

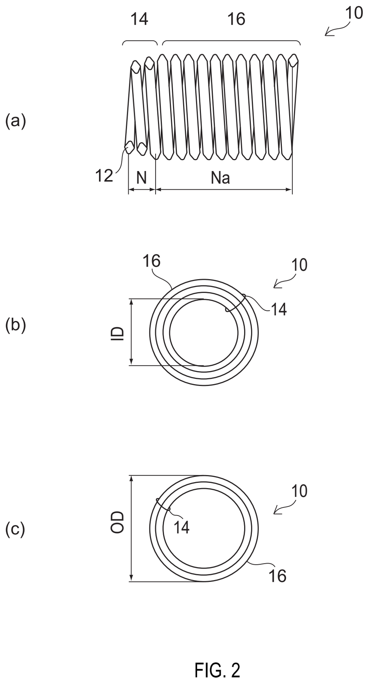

FIG. 2 is an external view of the fastening aid 10 shown in FIG. 1. FIG. 2(A) shows a front view of the fastening aid 10, FIG. 2(B) shows a left side view of the fastening aid 10, and FIG. 2(C) shows a right side view of the fastening aid 10, respectively.

It is to be noted that the meanings of the reference numerals shown in FIGS. 2(A) to 2(C) are as follows, and examples of their specifications are shown in Table 1 to be described later.
<FIG. 2(A)>
   N: number of turns of the wire 12 at the tapered portion 14
   Na: effective number of turns of the wire 12 at the body portion 16
<FIG. 2(B)>
   ID: inner diameter (reduced diameter) of the tapered portion 14
<FIG. 2(C)>
   OD: outer diameter of the body portion 16

The fastening aid 10 shown in FIGS. 2(A) to 2(C) reinforces the female thread portion 42 of the tapped hole 40 formed in the fastening target 30 shown in FIG. 1. The fastening aid 10 can be particularly suitably used when the fastening target 30 is made of a soft material such as resin or a soft metal including cast iron. The fastening aid 10 is made of stainless steel (for example, SUS304), phosphor bronze, or the like, and is coated with nickel or the like in consideration of workability and corrosion resistance. Alternatively, a stainless steel material or the like that has been pre-coated with nickel or the like may be selected.

The fastening aid 10 is manufactured by winding a wire 12 into a helical shape. As shown in FIG. 2(A), the wire 12 has, for example, a substantially rhombic cross-sectional shape. It is to be noted that this feature itself is a known technical matter disclosed also in Patent Document 1.

The fastening aid 10 has a tapered portion 14 at an insertion side into the tapped hole 40. An inner diameter ID of the tapered portion 14 is set to be equal to or smaller than a root diameter of the male thread portion 22 of the bolt 20. Specifically, the inner diameter may be, for example, 85% to 95% of the root diameter of the male thread portion 22 of the bolt 20, preferably 87% to 94%, and more preferably 88% to 93%. This is one of the characteristic technical features of the fastening aid 10 that is not disclosed in Patent Document 1.

The tapered portion 14 has a diameter that increases linearly from a tip side toward a base side. The term "linearly" as used herein also encompasses a mode in which the diameter increases in a curved manner. That is, the mode also includes a case where, with respect to an imaginary straight line connecting a first turn and a third turn of the wire 12 in FIG. 2(A), a second turn of the wire 12 is positioned on an outer peripheral side or an inner peripheral side thereof.

As shown in FIG. 2(A), the number of turns N of the tapered portion 14 of the wire 12 may be, for example, two. However, the number of turns of the tapered portion 14 only needs to be one or more. Since it is not necessary to unnecessarily increase the number of turns N, the number may preferably be, for example, at most about four to five turns.

The fastening aid 10 has a body portion 16 adjacent to a base side of the tapered portion 14. Unlike the tapered portion 14, the body portion 16 is not intentionally varied in its outer diameter OD. However, embodiments in which the outer diameter is varied are not excluded. As shown in FIG. 2(A), the effective number of turns Na of the wire 12 in the body portion 16 may be, for example, ten.

The effective number of turns Na may also be appropriately determined according to the length of the male thread portion 22 of the bolt 20 to be used and the depth of the fastening target 30. Thus, the fastening aid 10 of the present embodiment has flexibility in the length of the effective number of turns Na. However, in order for the fastening aid 10 to exhibit its function, it is preferable to ensure that the effective number of turns Na is three or more.

The fastening aid 10 can have specific sizes such as an inner diameter ID of the tapered portion 14 shown in FIG. 2(B) and an outer diameter OD of the body portion 16 shown in FIG. 2(C) selected according to the size of the bolt 20 to be used. The size of the bolt 20 is defined by a nominal designation (nominal diameter) such as M3, based on the diameter of the male thread portion 22.

Examples of sizes of the fastening aid 10 suitable for bolts 20 of representative standard sizes M3 to M14 are shown in Table 1 below. It is to be noted that the numerical values described in Table 1, particularly small values such as tolerances of the inner diameter ID and the outer diameter OD, are not absolute and may have a deviation of about ±10% from those shown in Table 1. For reference, examples of the sizes of the corresponding bolts 20 are shown in Table 2. The numerical values in Tables 1 and 2 are all in units of [mm].

**[Table 1]**

| Nominal diameter | Pitch | Number of turns N | Effective number of turns Na | Inner diameter ID | Outer diameter OD |
|---|---|---|---|---|---|
| M3 | 0. 5 0 | 2 | 3 or more | 2. 27±0. 06 | 3. 99±0. 13 |
| M4 | 0. 70 | 2 | 3 or more | 3. 00±0. 08 | 5. 30±0. 13 |
| M5 | 0. 80 | 2 | 3 or more | 3. 82±0. 10 | 6. 49±0. 13 |
| M6 | 1. 00 | 2 | 3 or more | 4. 55±0. 12 | 7. 73±0. 26 |
| M8 | 1. 25 | 2 | 3 or more | 6. 15±0. 17 | 10. 01±0. 27 |
| M10 | 1. 50 | 2 | 3 or more | 7. 75±0. 21 | 12. 35±0. 28 |
| M12 | 1. 75 | 2 | 3 or more | 9. 35±0. 25 | 14. 66±0. 32 |
| M14 | 2. 00 | 2 | 3 or more | 10. 95±0. 30 | 17. 00±0. 45 |

**[Table 2]**

| Nominal diameter | Pitch | Engaging height H1 | Outer diameter d | Effective diameter d2 | Root diameter d1 | Width across flats S |
|---|---|---|---|---|---|---|
| M3 | 0. 50 | 0. 270 | 3 | 2. 675 | 2, 459 | 5. 5 |
| M4 | 0. 70 | 0. 379 | 4 | 3. 545 | 3. 242 | 7. 0 |
| M5 | 0. 80 | 0. 433 | 5 | 4. 480 | 4. 134 | 8. 0 |
| M6 | 1. 00 | 0. 541 | 6 | 5. 350 | 4. 917 | 10. 0 |
| M8 | 1. 2 5 | 0. 677 | 8 | 7. 188 | 6. 647 | 13. 0 |
| M10 | 1. 5 0 | 0. 812 | 10 | 9. 026 | 8. 376 | 17. 0 |
| M12 | 1. 7 5 | 0. 947 | 12 | 10. 863 | 10. 11 | 19. 0 |
| M14 | 2. 00 | 1. 083 | 14 | 12. 70 | 11. 83 | 22. 0 |

For example, in the case of the fastening aid 10 for an "M6" bolt, which is an intermediate size among those shown in Table 1:
- the pitch between axial centers of adjacent wires 12 is "1.00 mm";
- the number of turns N of the tapered portion 14 of the wire 12 is "two turns";
- the effective number of turns Na of the body portion 16 of the wire 12 is "three turns or more";
- the inner diameter ID of the tapered portion 14 is "4.55 mm ± 0.12 mm"; and
- the outer diameter OD of the body portion 16 is "7.33 mm ± 0.26 mm."

In the case of the "M6" bolt 20 among those shown in Table 2:
- the pitch P between thread crests of the male thread portion 22 is "1.00 mm";
- the engaging height H1 (long diagonal length of the cross section of the wire 12) is "0.541 mm";
- the outer diameter d of the male thread portion 22 is "6 mm";
- the effective diameter d2 of the male thread portion 22 is "5.350 mm";
- the root diameter d1 of the male thread portion 22 is "4.917 mm"; and
- the width across flats S of the head 24 (in the case of a hexagonal bolt) is "10 mm."

As a specific fastening procedure of fastening the fastening assembly 100 to the fastening target 30:
(1) the fastening aid 10 is first mounted by screwing several turns (for example, two to three turns) of the male thread portion 22 of the bolt 20 into the fastening aid 10 from the tip side toward the body portion 16 side;
(2) in this state, the tapered portion 14 of the fastening aid 10 is aligned with the tapped hole 40; and
(3) the head 24 of the bolt 20 is rotated using a general-purpose electric tool such as a commercially available electric driver (not shown) or a manual tool such as a hexagonal wrench;
whereby the bolt 20 is fastened to the fastening target 30.

The relationship among the fastening aid 10, the bolt 20, and the fastening target 30 during the steps (1) to (3) described above is generally as follows. For example, in the case of an M6, the inner diameter of the female thread portion 42 of the tapped hole 40 may be 6.3 mm.
(1): The pitch of the male thread portion 22 of the bolt 20 is smaller than the pitch of the wire 12 of the fastening aid 10. Therefore, the fastening aid 10 is mounted on the bolt 20 such that an end portion on the body portion 16 side is expanded at least in an extending direction by the male thread portion 22.
(2): The outer diameter of the tapered portion 14 of the fastening aid 10 is smaller than the inner diameter of the female thread portion 42 of the tapped hole 40. Therefore, the fastening aid 10 mounted on the bolt 20 is smoothly guided into the tapped hole 40 by the tip end of the tapered portion 14.
(3): As the screwing between the fastening aid 10 and the bolt 20 progresses, the bolt 20 is fastened to the fastening target 30 through the fastening aid 10.

It is also possible to ship the fastening assembly in a state in which the bolt 20 is mounted in the fastening aid 10, so that an operator does not need to perform the mounting operation between the fastening aid 10 and the bolt 20 in step (1) above. Specifically, in such a case, if the fastening aid 10 is mounted on the male thread portion 22 of the bolt 20 from the tip side by screwing at least, for example, two turns from the body portion 16 side, the mounted state can be maintained even when vibrations occur during transportation or contact occurs with other fastening assemblies. However, screwing with a greater number of turns may also be employed.

Further, in the fastening aid 10 of the present embodiment, by reversely rotating the head 24 of the bolt 20 using a general-purpose electric driver or the like that is commercially available, it is possible to release only the bolt 20 while the fastening aid 10 remains in the fastening target 30.

### BRIEF EXPLANATION OF THE DRAWINGS

[FIG. 1] Explanatory view of a fastening assembly 100 according to an embodiment of the present invention.
[FIG. 2] External views of a fastening aid 10 shown in FIG. 1.

### INDEX TO THE REFERENCE NUMERALS

100 fastening assembly
10 fastening aid
12 wire
14 tapered portion
16 body portion
20 bolt
22 male thread portion
24 head
30 fastening target
40 tapped hole
42 female thread portion

## Claims

1. A fastening aid, formed of a wire processed into a helical shape, for reinforcing a female thread portion of a tapped hole formed in a fastening target of a bolt,
wherein the fastening aid has a tapered portion at an insertion side to be inserted into the tapped hole, and
wherein an inner diameter of the tapered portion is equal to or smaller than a root diameter of a male thread portion of the bolt.

2. The fastening aid according to claim 1,
wherein the inner diameter of the tapered portion is 90% to 95% of the root diameter of the male thread portion of the bolt.

3. The fastening aid according to claim 1,
wherein the tapered portion of the wire has one or more turns.

4. The fastening aid according to claim 1,
wherein the tapered portion of the wire has two or more turns, and
wherein a diameter of the tapered portion increases linearly from a tip side toward a base side.

5. A fastening assembly comprising:
the fastening aid according to claim 1; and
a bolt to be used together with the fastening aid.

6. The fastening assembly according to claim 5,
wherein the bolt is mounted in the fastening aid.
